# EUROPÄISCHE PATENTSCHRIFT

(11) **EP 0 557 478 B1**
(45) Veröffentlichungstag und Bekanntmachung des Hinweises auf die Patenterteilung: **11.10.1995**
(21) Anmeldenummer: 92917528.9
(22) Anmeldetag: 26.08.1992
(51) Int. Cl.: B30B 9/26

(54) **VERFAHREN ZUR VERMEIDUNG VON LAUFMASCHEN AN DER FILTERHÜLLE EINES DRAINAGEELEMENTS**
PROCESS FOR PREVENTING RUNS IN THE FILTER WRAP OF A DRAINING ELEMENT
PROCEDE SERVANT A EMPECHER DES MAILLES DE FILER DANS LA GAINE FILTRANTE D'UN ELEMENT DE DRAINAGE

(30) Priorität: 12.09.1991 CH 2684/91
(43) Veröffentlichungstag der Anmeldung: 01.09.1993
(73) Patentinhaber: BUCHER-GUYER AG Maschinenfabrik, CH-8166 Niederweningen (CH)
(72) Erfinder: HARTMANN, Eduard, CH-5425 Schneisingen (CH)
(86) Internationale Anmeldenummer: CH9200169
(87) Internationale Veröffentlichungsnummer: WO9304849

(56) Entgegenhaltungen:
- EP-A- 0 390 921
- DE-A- 3 802 037
- GB-A- 1 544 979

## Beschreibung

Die Erfindung betrifft ein Verfahren zur Vermeidung von Laufmaschen an der gestrickten, textilen Filterhülle eines Drainageelementes, insbesondere für Früchtepressen, mittels starrer Fixierung der Maschen am Ende der Filterhülle.

Derartige Drainageelemente sind im Pressraum einer Früchtepresse angeordnet und dienen dem Zweck, den ausgepressten Saft aus dem Pressraum in gesonderte Saftsammelräume zu leiten. Hierzu ist der stabförmige, flexible Kern des Drainageelementes mit Längsnuten versehen und von einer gestrickten, textilen Filterhülle umgeben, durch die der Saft hindurchdringt und entlang den Längsnuten in den Saftsammelraum abgeleitet wird. Die Enden jedes Drainageelementes sind über Drainageschlösser an den Saftsammelplatten, die einerseits den Pressraum und andererseits die Saftsammelräume begrenzen, lösbar befestigt.

Beim Zusammenbau des Drainageelementes wird das Filterhüllenende über je eine an den Enden des Kerns angeordnete Gummistulpe gezogen und mit einem O-Ring gesichert. Dieser Vorgang ist nur mit einer Dehnung des Filterhüllenumfanges möglich. Bedingt durch die gestrickte Herstellart der Filterhülle lösen sich unter seitlicher Zugbeanspruchung öfters Laufmaschen am Filterhüllenende, die nach innen bis ausserhalb des Drainageschlossbereiches wandern und die Filterhülle in diesem Bereich zerstören bzw. die Filterwirkung stark herabsetzen. Zur Vermeidung der Laufmaschenbildung wurden bisher die Filterhüllenenden bereits mit einer speziellen Heissdraht-Schneideinrichtung abgelängt und fixiert. Trotzdem treten bei unvorsichtiger Montage immer wieder Laufmaschen auf. Die Fixierung der Maschen durch Verschweissen verhindert zwar die Laufmaschenbildung. Sie beseitigt aber andererseits auch die Dehnfähigkeit des Filterhüllenendes und erschwert dadurch die Montage oder macht diese sogar unmöglich.

Gemäss DE-A- 38 02 037 (Rathgeb, M.) ist zur Erzielung einer hohen Lebensdauer bei gleichbleibenden Gebrauchseigenschaften ein gestrickter Filterschlauch, insbesondere für den Bereich der Lebensmitteltechnik, beispielsweise für Fruchtsaftgewinnungsanlagen, vorgesehen. Der Filterschlauch besteht aus einer Stricklage, welche zumindest wiederum aus einem mono- und/oder multifilen Strang besteht. Dabei ist zumindest eine Stricklage aus mono- und multifilen Strängen vorgesehen, wobei die monofilen Stränge nach einer vorbestimmten Anzahl multifiler Stränge eingestrickt sind.

Der Erfindung liegt die Aufgabe zugrunde, die Laufmaschenbildung an der Filterhülle bei deren Montage mit einem relativ geringen Kostenaufwand zu vermeiden, ohne dadurch die Montage zu beeinträchtigen.

Gemäss der Erfindung wird diese Aufgabe dadurch gelöst, dass im Befestigungsbereich der Filterhülle zumindest teilweise Laufmaschen zugelassen werden, die am Ende des Befestigungsbereiches durch Fixierung der Maschen gestoppt werden.

Damit Laufmaschen in beschränkter Anzahl am Filterhüllenende entstehen können und nach einer bestimmten Länge wieder gestoppt werden, ist die Fixierung der Maschen in einer oder mehreren der ersten Maschenreihen in Umfangsrichtung unterbrochen und in einer oder mehreren Maschenreihen am Ende des Befestigungsbereiches in Umfangsrichtung versetzt angeordnet.

In einer bevorzugten Ausführungsform der Erfindung sind die Fixierungen kreisförmig ausgeführt und in Umfangsrichtung an jeder zweiten Masche angeordnet, wobei die Fixierungen am Ende des Befestigungsbereiches um eine Masche gegenüber den Fixierungen der ersten Maschenreihe in Umfangsrichtung versetzt sind.

In verschiedenen anderen Ausführungsformen der Erfindung können die Fixierungen in Umfangsrichtung gerade, schräg, wellenförmig, zick-zack-förmig oder punktförmig ausgebildet sein.

Um ein grösstmögliches Mass an Dehnbarkeit des Filterhüllenendes zu erreichen, werden nach einem weiteren Ausführungsbeispiel der Erfindung im gesamten Befestigungsbereich der Filterhülle Laufmaschen ohne Beschränkung ihrer Anzahl zugelassen, die am Ende des Befestigungsbereiches durch eine in Umfangsrichtung ununterbrochene Fixierung gestoppt werden.

Zweckmässigerweise ist die Fixierung in Richtung des Pressraumes gesehen vor dem O-Ring des Drainageschlosses angeordnet.

Zur Erhöhung der Verschleissfestigkeit der Filterhülle ist nach einem weiteren Merkmal der Erfindung die Fixierung der Maschen in Richtung des Pressraumes verlängert und erstreckt sich über den ganzen Bereich der kritischen Verschleisszone des Drainageelements.

Eine Verbesserung des Verschleissverhaltens kann auch dadurch erreicht werden, dass anstelle der festen Fixierung innerhalb der Verschleisszone die Filterhülle mit einem verschleissfesten Faden verstärkt ist. In diesem Fall werden gleichzeitig auch Laufmaschen verhindert, insbesondere wenn der Faden ein Mono- oder Gummifaden ist.

Vorteilhafterweise erfolgt die Fixierung der Maschen durch Ultraschallschweissung oder Heissluftschweissung.

Für runde oder punktförmige Fixierungen ist die Verwendung von düsenartigen Einrichtungen zum Heissluft- oder Sprüh-Kleben der Maschen besonders gut geeignet.

Die mit der Erfindung erzielten Vorteile bestehen insbesondere darin, dass durch die erfindungsgemässe Anordnung der Maschen-Fixierungen die Bildung von Laufmaschen im Filtrierbereich der Filterhülle nicht mehr möglich ist. Andererseits werden am Filterhüllenende in beschränkter Anzahl und/oder Länge Laufmaschen zugelassen, sodass die Dehnfähigkeit des Filterhüllenendes erhalten bleibt und die Montage der Filterhülle erleichtert wird.

Die Erfindung ist in der folgenden Beschreibung und der Zeichnung, die mehrere Ausführungsbeispiele in schematischer Darstellung zeigt, näher erläutert. Es zeigen
- Fig. 1: einen Längsschnitt durch ein Drainageelement mit montierter Filterhülle,
- Fig. 2: eine vergrösserte Ansicht der gestrickten Filterhülle mit Kreisförmigen Fixierungen der Maschen,
- Fig. 3: die Filterhülle nach Fig. 2 mit schräg verlaufenden Fixierungen,
- Fig. 4: eine schematische Darstellung geradlinig verlaufender Fixierungen,
- Fig. 5: eine schematische Darstellung schräg verlaufender Fixierungen,
- Fig. 6: eine schematische Darstellung eines Ausführungsbeispiels mit punktförmigen Fixierungen,
- Fig. 7: die Fixierungen nach Fig. 6, jedoch in Zick-Zack-Anordnung,
- Fig. 8: eine schematische Darstellung eines Ausführungsbeispiels mit linienförmigen Fixierungen in Rechteck-Anordnung,
- Fig. 9: eine schematische Darstellung eines Ausführungsbeispiels mit linienförmigen Fixierungen in Zick-Zack-Anordnung,
- Fig. 10: eine schematische Darstellung eines Ausführungsbeispiels mit wellenförmigen Fixierungen,
- Fig. 11: eine schematische Darstellung eines Ausführungsbeispiels mit bogenförmigen Fixierungen,
- Fig. 12: eine andere Ausführungsform mit einer am Ende des Befestigungsbereiches angeordneten, in Umfangsrichtung ununterbrochenen Fixierung und
- Fig. 13: die Fixierung nach Fig. 12, ausgedehnt auf den gesamten Bereich der Verschleisszone des Drainageelements.

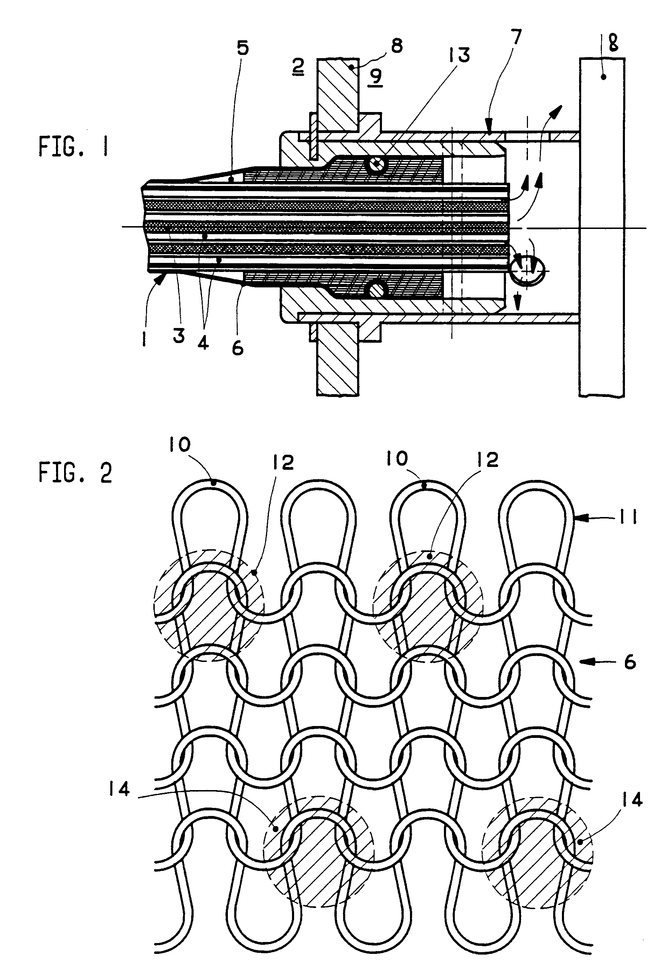

In Fig. 1 ist das Ende eines Drainageelements 1 gezeigt, das im Pressraum 2 einer nicht dargestellten Früchtepresse angeordnet ist. Das Drainageelement 1 besteht aus einem stabförmigen, flexiblen Kern 3, der am Umfang mehrere Längsnuten 4 zum Ableiten des ausgepressten Saftes aufweist. An den Enden des Drainageelements 1 ist je eine Gummistulpe 5 fest angeordnet. Der Kern 3 ist von einer strumpfförmigen, rundgestrickten Filterhülle 6 aus Textilmaterial umgeben, durch die der im Pressraum 2 vorhandene Saft hindurchdringt und gefiltert wird. Über die Längsnuten 4 wird der gefilterte Saft durch ein Drainageschloss 7 hindurch, mit dem das Drainageelement 1 an Saftsammelplatten 8 lösbar befestigt ist, in benachbarte Saftsammelräume 9 geleitet.

Um die Bildung von Laufmaschen an den Enden der Filterhülle 6 zu verhindern, sind die Maschen 10 der ersten Maschenreihe 11 (Fig. 2) mit den sich anschliessenden Maschen der zweiten Maschenreihe durch kreisförmige Fixierungen 12 fest mit einander verbunden. Bei der Montage muss das Ende der Filterhülle 6 aufgeweitet werden, damit es über die Gummistulpe 5 gestülpt und mit einem O-Ring 13 axial gesichert werden kann. Um diese Aufweitung der Filterhülle 6 zu ermöglichen, ist im Ausführungsbeispiel nach Fig. 2 nur jede zweite Masche 10 der ersten Maschenreihe 11 mit den Maschen der zweiten Maschenreihe durch die Fixierungen 12 fest verbunden. Dabei können sich die zwischen den Maschen 10 liegenden, nicht fixierten Maschen auflösen und eine Laufmasche bilden. Damit sich die Laufmasche, die die Aufweitung der Filterhülle 6 am Ende ermöglicht, nicht über den Befestigungsbereich der Filterhülle 6 fortsetzt, sind am Ende des Befestigungsbereiches Fixierungen 14 vorgesehen, die zu den Fixierungen 12 der ersten Maschenreihe 11 in Umfangsrichtung um eine Masche versetzt angeordnet sind und die zugelassene Laufmasche am Weiterlaufen hindern. Durch diese begrenzte Zulassung von Laufmaschen im Befestigungsbereich wird einerseits die für die Montage erforderliche Aufweitung der Filtehülle 6 ermöglicht und andererseits eine fortlaufende Laufmaschenbildung verhindert.

Die örtlich begrenzte Fixierung der einzelnen Maschen erfolgt vorzugsweise durch Ultraschallschweissung. Diese Schweissart erlaubt kurze Taktzeiten bei hoher Schweissqualität und geringem Kostenaufwand. Es sind aber auch andere Verbindungsarten wie Heissluft, Kontaktschweissen, Kleben etc. anwendbar. Die kreisförmigen Fixierungen 12 gemäss Fig. 2 ermöglichen insbesondere den Einsatz düsenartiger Einrichtungen, wie z. B. Heissluft oder Sprühkleben.

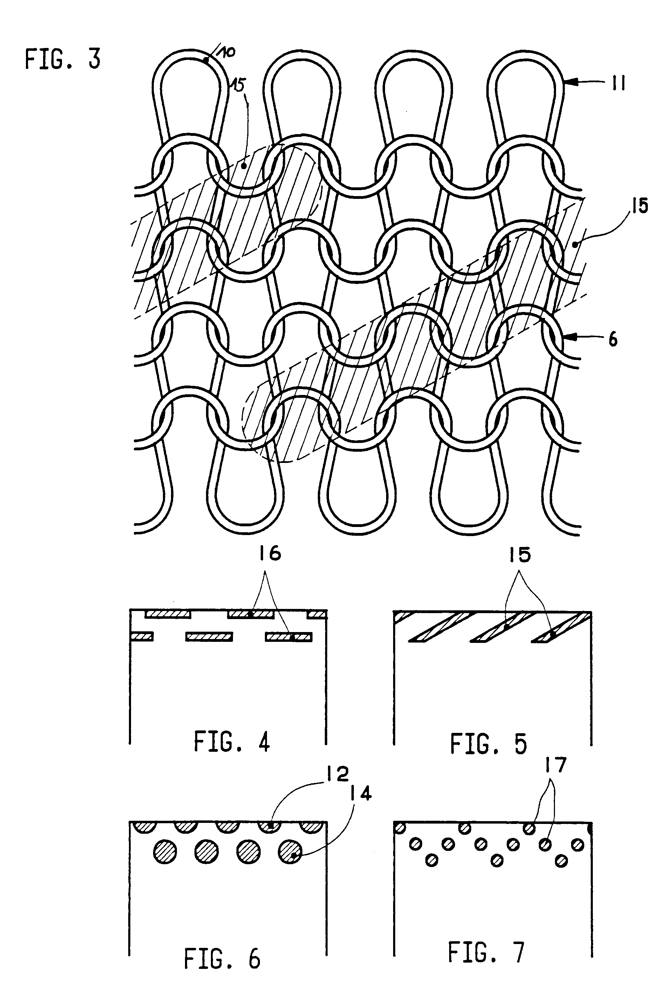

Im Ausführungsbeispiel nach Fig. 3 verlaufen die in Umfangrichtung unterbrochenen Fixierungen 15 geradlinig und schräg zur Maschenreihe 11 über mehrere Maschenreihen hinweg. Dabei erstreckt sich die Fixierung 15 von der ersten Maschenreihe 11 bis zum Ende des Befestigungsbereiches der Filterhülle 6. Dadurch, dass sich jeweils der Anfang und das Ende einer Fixierung 15 in Umfangsrichtung überdecken, wird eine fortlaufende Laufmaschenbildung über den Befestigungsbereich der Filterhülle 6 hinaus verhindert.

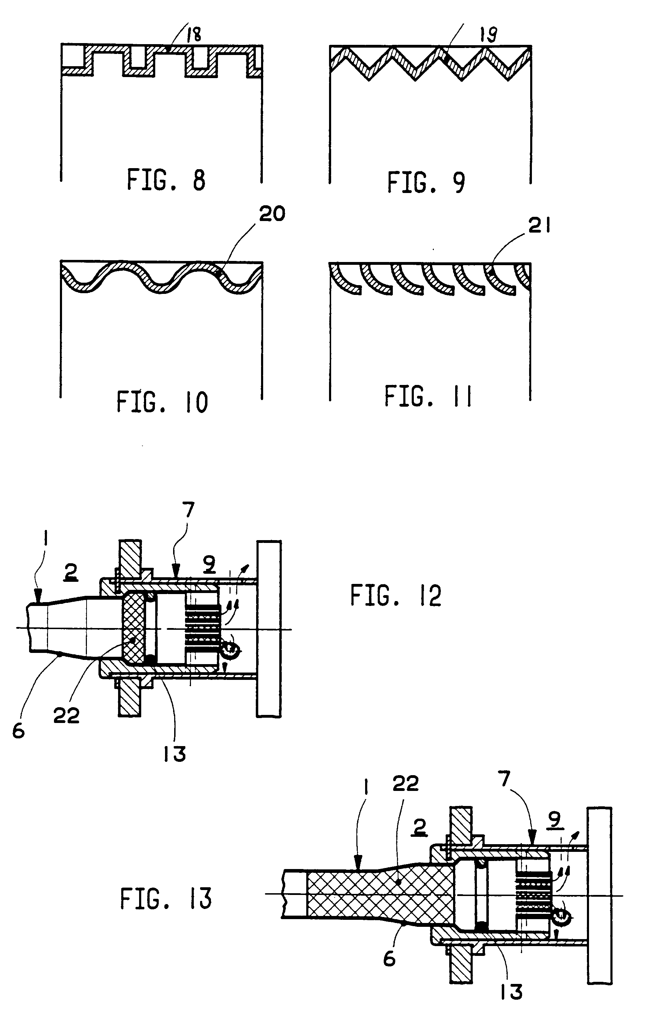

Die Fig. 4 zeigt eine schematische Darstellung von geradlinigen, parallel zu den Maschenreihen 11 verlaufenden, in Umfangsrichtung unterbrochenen Fixierungen 16, die in Längsrichtung und Umfangsrichtung der Filterhülle 6 versetzt zueinander angeordnet sind.

In Fig. 5 und 6 sind die Fixierungen 15 gemäss Fig. 3 und die Fixierungen 12, 14 gemäss Fig. 2 nochmals schematisch dargestellt.

Als weitere Ausführungsformen sind punktförmige Fixierungen 17 in Zick-Zack-Anordnung (Fig. 7), geradlinige Fixierungen 18 in Rechteck-Anordnung (Fig. 8), geradlinige Fixierungen 19 in Zick-Zack-Anordnung (Fig. 9), wellenförmige Fixierungen 20 (Fig. 10) und bogenförmige Fixierungen 21 (Fig. 11) anwendbar. Bei allen Ausführungsformen überdecken die Fixierungen in Längsrichtung den gesamten Befestigungsbereich der Filterhülle 6, wobei eine Dehnung der Filterhülle 6 in Umfangsrichtung durch eine nach Anzahl und Länge begrenzte Laufmaschenbildung ermöglicht wird.

Eine andere Ausführungsform der Erfindung ist in den Fig. 12 und 13 dargestellt. Die Fixierung 22 ist bei dieser Ausführung in Richtung des Pressraumes 2 gesehen vor dem O-Ring 13 angeordnet und verläuft in Umfangsrichtung ohne Unterbrechung. Dadurch werden am Ende der Filterhülle 6 Laufmaschen zugelassen, die in diesem Bereich die Aufweitung der Filterhülle 6 ermöglichen, aber durch die Fixierung 22 gestoppt werden. Da die Fixierung 22 unmittelbar vor dem O-Ring 13 liegt, wird die Filterwirkung der Filterhülle 6 durch die Laufmaschen nicht beeinträchtigt.

Die Fig. 13 zeigt eine Ausführung, bei der die Fixierung 22 über die kritische Verschleisszone der Filterhülle 6 hinaus in Richtung des Pressraumes 2 verlängert ist. Die Fixierung 22, die vorzugsweise mittels Heissluft durchgeführt wird, bewirkt eine Verschleissminderung der Filterhülle 6 in diesem besonders verschleissgefährdeten Bereich. Die äusseren Fasern der Filterhülle 6 sind fixiert und dadurch weniger verschleissanfällig. Anstelle der Fixierung 22 kann diese Verschleisszone auch mit einem in diesem Bereich eingestrickten, speziell verschleissfesten Faden verstärkt werden. Durch die Verwendung eines Mono- oder Gummifadens wird gleichzeitig auch die Laufmaschenbildung verhindert.

## Patentansprüche

1. Verfahren zur Vermeidung von Laufmaschen an der gestrickten, textilen Filterhülle eines Drainageelements, insbesondere für Früchtepressen, mittels starrer Fixierung der Maschen am Ende der Filterhülle, dadurch gekennzeichnet, dass im Befestigungsbereich der Filterhülle (6) zumindest teilweise Laufmaschen zugelassen werden, die am Ende des Befestigungsbereiches durch Fixierung der Maschen (10) gestoppt werden.

2. Verfahren nach Anspruch 1, dadurch gekennzeichnet, dass die Fixierung der Maschen (10) in einer oder mehreren der ersten Maschenreihen (11) in Umfangsrichtung unterbrochen und in einer oder mehreren Maschenreihen am Ende des Befestigungsbereiches in Umfangsrichtung versetzt angeordnet ist.

3. Verfahren nach Anspruch 2, dadurch gekennzeichnet, dass die Fixierungen (12, 14) kreisförmig ausgeführt und in Umfangsrichtung an jeder zweiten Masche (10) angeordnet sind, wobei die Fixierungen (14) an Ende des Befestigungsbereiches um eine Masche (10) in Umfangsrichtung gegenüber den Fixierungen (12) der ersten Maschenreihe (11) versetzt sind.

4. Verfahren nach Anspruch 1 oder 2, dadurch gekennzeichnet, dass die Fixierungen (16) geradlinig und parallel zu den Maschenreihen (11) verlaufen, in Umfangsrichtung unterbrochen sind und sich in Längsrichtung der Filterhülle (6) überdecken.

5. Verfahren nach Anspruch 1 oder 2, dadurch gekennzeichnet, dass die Fixierungen (15) schräg zu den Maschenreihen (11) verlaufen, in Umfangsrichtung unterbrochen sind und sich über mehrere Maschenreihen erstrecken.

6. Verfahren nach Anspruch 1 oder 2, dadurch gekennzeichnet dass die Fixierungen (17) punktförmig ausgeführt sind.

7. Verfahren nach Anspruch 1 oder 2, dadurch gekennzeichnet, dass die Fixierungen (17, 20) wellen- oder zick-zack-förmig verlaufen.

8. Verfahren nach Anspruch 1, dadurch gekennzeichnet, dass im gesamten Befestigungsbereich der Filterhülle (6) Laufmaschen ohne Beschränkung ihrer Anzahl zugelassen werden, die am Ende des Befestigungsbereiches durch eine in Umfangsrichtung ununterbrochene Fixierung (22) gestoppt werden.

9. Verfahren nach Anspruch 8, dadurch gekennzeichnet, dass die Fixierung (22) in Richtung des Pressraumes (2) gesehen vor dem O-Ring (13) des Drainageschlosses (7) angeordnet ist.

10. Verfahren nach Anspruch 8 oder 9, dadurch **gekennzeichnet**, dass die Fixierung (22) der Maschen (10) in Richtung des Pressraumes (2) verlängert ist und sich über den ganzen Bereich der kritischen Verschleisszone des Drainageelements (7) erstreckt.

11. Verfahren nach Anspruch 10, dadurch **gekennzeichnet**, dass die Filterhülle (6) anstelle der festen Fixierung (22) innerhalb der Verschleisszone mit einem verschleissfesten Faden verstärkt ist.

12. Verfahren nach Anspruch 11, dadurch **gekennzeichnet**, dass der Faden ein Mono- oder Gummifaden ist.

13. Verfahren nach einem der Ansprüche 1 bis 10, dadurch **gekennzeichnet**, dass die Fixierung der Maschen (10) durch Ultraschallschweissung erfolgt.

14. Verfahren nach einem der Ansprüche 1 bis 10, dadurch **gekennzeichnet**, dass die Fixierung der Maschen (10) durch Heissluftschweissung erfolgt.

15. Verfahren nach einem der Ansprüche 1 bis 10, dadurch gekennzeichnet, dass für die Fixierung der Maschen (10) düsenartige Einrichtungen zum Heissluft- oder Sprüh-Kleben verwendet werden.

## Claims

1. Process for preventing runs in the knitted fabric filter wrap of a drainage element, in particular for fruit presses, by means of the rigid attachment of the stitches to the end of the filter wrap, characterised in that at least partial runs are permitted in the fastening region of the filter wrap (6), these being stopped at the end of the fastening region by the attachment of the stitches (10).

2. Process according to claim 1, characterised in that the stitches (10) are attached in an intermittent manner in the circumferential direction in one or more of the first rows (11) of stitches and in an offset manner in the circumferential direction in one or more rows of stitches at the end of the fastening region.

3. Process according to claim 2, characterised in that the attachments (12, 14) are carried out in a circular manner and are arranged on every second stitch (10) in the circumferential direction, the attachments (14) at the end of the fastening region being offset by one stitch (10) in the circumferential direction relative to the attachments (12) of the first row (11) of stitches.

4. Process according to claim 1 or claim 2, characterised in that the attachments (16) extend linearly and parallel to the rows (11) of stitches, are intermittent in the circumferential direction and overlap in the longitudinal direction of the filter wrap (6).

5. Process according to claim 1 or claim 2, characterised in that the attachments (15) extend obliquely relative to the rows (11) of stitches, are intermittent in the circumferential direction and extend over a plurality of rows of stitches.

6. Process according to claim 1 or claim 2, characterised in that the attachments (17) are carried out in points.

7. Process according to claim 1 or claim 2, characterised in that the attachments (17, 20) extend in a wavy or zig-zag manner.

8. Process according to claim 1, characterised in that an unlimited number of runs are permitted in the entire fastening region of the filter wrap (6), these being stopped at the end of the fastening region by continuous attachment (22) in the circumferential direction.

9. Process according to claim 8, characterised in that the attachment (22) is arranged in front of the O-ring (13) of the drainage stop (7) as viewed in the direction of the pressing space (2).

10. Process according to claim 8 or claim 9, characterised in that the attachment (22) of the stitches (10) is extended in the direction of the pressing space (2) and extends over the entire region of the critical abrasion zone of the drainage element (7).

11. Process according to claim 10, characterised in that, instead of the rigid attachment (22), the filter wrap (6) is strengthened within the abrasion zone by an abrasion-resistant thread.

12. Process according to claim 11, characterised in that the thread is a single-strand thread or a rubber thread.

13. Process according to one of claims 1 to 10, characterised in that the stitches (10) are attached by ultrasonic welding.

14. Process according to one of claims 1 to 10, characterised in that the stitches (10) are attached by hot-air welding.

15. Process according to one of claims 1 to 10, characterised in that nozzle-type means for hot-air or spray fixing are used for the attachment of the stitches (10).

## Revendications

1. Procédé pour éviter les mailles filées sur la gaine filtrante en textile tricoté d'un élément de drainage, en particulier pour des presses à fruits, au moyen d'un assujettissement fixe des mailles à l'extrémité de la gaine filtrante, caractérisé par le fait que, dans la région de la fixation de la gaine filtrante (6), on admet, du moins partiellement, des mailles filées qui sont arrêtées, à l'extrémité de la région de la fixation, par l'assujettissement des mailles (10) entre elles.

2. Procédé selon la revendication 1, caractérisé par le fait que l'assujettissement des mailles (10) entre elles est interrompu dans la direction de la périphérie sur une ou plusieurs des premières rangées de mailles (11), et qu'il est disposé en étant décalé dans la direction de la périphérie sur une ou plusieurs rangées de mailles à l'extrémité de la région de la fixation de la gaine.

3. Procédé selon la revendication 2, caractérisé par le fait que les assujettissements (12, 14) sont réalisés en forme de cercles, et qu'ils sont situés sur une maille (10) sur deux dans la direction de la périphérie, les assujettissements (14) étant décalés d'une maille (10) dans la direction de la périphérie à l'extrémité de la région de la fixation de la gaine par rapport aux assujettissements (12) de la première rangée de mailles (11).

4. Procédé selon la revendication 1 ou 2, caractérisé par le fait que les assujettissements (16) s'étendent en ligne droite et parallèlement aux rangées de mailles (11), qu'ils sont interrompus dans la direction de la périphérie et qu'ils sont superposés dans la direction longitudinale de la gaine filtrante (6).

5. Procédé selon la revendication 1 ou 2, caractérisé par le fait que les assujettissements (15) s'étendent obliquement par rapport aux rangées de mailles (11), qu'ils sont interrompus dans la direction de la périphérie et qu'ils s'étendent sur plusieurs rangées de mailles.

6. Procédé selon la revendication 1 ou 2, caractérisé par le fait que les assujettissements (17) sont réalisés en forme de points.

7. Procédé selon la revendication 1 ou 2, caractérisé par le fait que les assujettissements (17, 20) sont réalisés en forme d'ondulations ou en zigzag.

8. Procédé selon la revendication 1, caractérisé par le fait que, sans limitation de leur nombre, on admet des mailles filées dans la totalité de la région de la fixation de la gaine filtrante (6), celles-ci étant arrêtées à l'extrémité de la région de la fixation par un assujettissement (22) qui est ininterrompu dans la direction de la périphérie.

9. Procédé selon la revendication 8, caractérisé par le fait que l'assujettissement (22) est disposé devant le joint torique (13) de la platine de drainage (7) lorsqu'il est vu dans la direction de la chambre de pressage (2).

10. Procédé selon la revendication 8 ou 9, caractérisé par le fait que l'assujettissement (22) des mailles (10) entre elles est prolongé dans la direction de la chambre de pressage (2), et qu'il s'étend au-delà de la totalité de la région de la zone critique d'usure de l'élément de drainage (1).

11. Procédé selon la revendication 10, caractérisé par le fait qu'à la place de l'assujettissement fixe (22), la gaine filtrante (6) est renforcée à l'intérieur de la zone d'usure par un fil résistant à l'usure.

12. Procédé selon la revendication 11, caractérisé par le fait que le fil est un fil à filament unique ou un fil en caoutchouc.

13. Procédé selon l'une des revendications 1 à 10, caractérisé par le fait que l'assujettissement des mailles (10) entre elles a lieu au moyen d'un soudage par ultrasons.

14. Procédé selon l'une des revendications 1 à 10, caractérisé par le fait que l'assujettissement des mailles (10) entre elles a lieu au moyen d'un soudage à l'air chaud.

15. Procédé selon l'une des revendications 1 à 10, caractérisé par le fait que l'on utilise pour l'assujettissement des mailles (10) entre elles des dispositifs analogues à des buses en vue du collage à l'air chaud ou par pulvérisation.
